(19) Europäisches Patentamt
European Patent Office
Office européen des brevets

(11) Veröffentlichungsnummer: **0 205 830 A1**

(12) **EUROPÄISCHE PATENTANMELDUNG**

(21) Anmeldenummer: **86105863.4**

(22) Anmeldetag: **28.04.86**

(51) Int. Cl.⁴: **C 07 F 9/40**, A 01 N 57/18, C 07 F 9/42

(30) Priorität: **14.05.85 JP 100606/85**

(43) Veröffentlichungstag der Anmeldung: **30.12.86 Patentblatt 86/52**

(84) Benannte Vertragsstaaten: **AT BE CH DE FR GB IT LI NL**

(71) Anmelder: **NIHON TOKUSHU NOYAKU SEIZO K.K., No.4, 2-chome, Nihonbashi Honcho Chuo-ku, Tokyo 103 (JP)**

(72) Erfinder: **Kume, Toyohiko, 6-7-8, Asahigaoka, Hino-shi Tokyo (JP)**
Erfinder: **Tsuboi, Shinichi, 3-26-1, Hirayama, Hino-shi Tokyo (JP)**
Erfinder: **Isono, Kunihiro, 2-32-4, Asahigaoka, Hino-shi Tokyo (JP)**
Erfinder: **Sasaki, Shoko, 1-7-3, Higashi-Hirayama, Hino-shi Tokyo (JP)**

(74) Vertreter: **Schumacher, Günter, Dr. et al, c/o Bayer AG Konzernverwaltung RP Patentabteilung, D-5090 Leverkusen 1 Bayerwerk (DE)**

(54) **Phosphonsäureester.**

(57) Offenbart werden neue Phosphonsäureester der Formel (I)

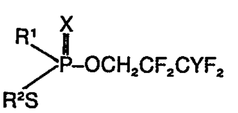

(I)

in der

$R^1$ Niederalkyl oder Phenyl bezeichnet,
$R^2$ Niederalkyl bezeichnet,
X Sauerstoff oder Schwefel bezeichnet und
Y Wasserstoff oder Fluor bezeichnet,

sowie die Verwendung der neuen Verbindungen als Insektizide, Akarizide und Nematizide.

EP 0 205 830 A1

86105063.4

0205830



## Phosphonsäureester

Die vorliegende Erfindung betrifft neue Phosphonsäureester, Verfahren zu ihrer Herstellung sowie ihre Verwendung als Insektizide, Akarizide und Nematizide.

Es wurde bereits offenbart, daß ein bestimmter Phosphonsäureester als Weichmacher und als flammenhemmendes Mittel wertvoll ist (siehe die JP-OS 142 516/1975).

Nunmehr wurden neue Phosphonsäureester der Formel (I)

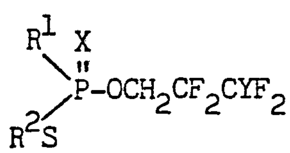

(I)

gefunden, in der

$R^1$ Niederalkyl oder Phenyl bezeichnet,

$R^2$ Niederalkyl bezeichnet,

X Sauerstoff oder Schwefel bezeichnet und

Y Wasserstoff oder Fluor bezeichnet.

Weiterhin wurde gefunden, daß die Verbindungen der Formel (I) mittels eines Verfahrens erhalten werden, bei dem in dem Fall, in dem X in der Formel (I) Sauerstoff ist,

(a) Verbindungen der Formel (II)

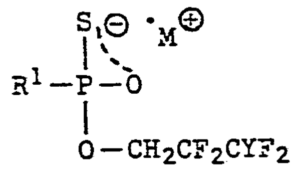 (II) ,

in der

$R^1$ und Y die im Vorstehenden angegebenen Bedeutungen haben und

M ein Alkalimetall- oder Ammonium-Ion bezeichnet,

mit Verbindungen der Formel (III)

$$R^2 - Z \qquad (III),$$

in der

$R^2$ die im Vorstehenden angegebenen Bedeutungen hat und

Z für Halogen oder die Gruppe $-OSO_2R^3$ steht, worin $R^3$ Niederalkyl oder Aryl bezeichnet,

umgesetzt werden, gegebenenfalls in Gegenwart inerter Lösungsmittel,

oder

(b) Verbindungen der Formel (IV)

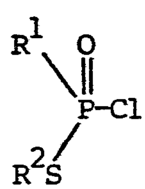 (IV) ,

in der

$R^1$ und $R^2$ die im Vorstehenden angegebenen Bedeutungen haben,

mit Verbindungen der Formel (V)

$$HO\text{-}CH_2CF_2CYF_2 \qquad (V),$$

in der

Y die im Vorstehenden angegebenen Bedeutungen hat,

umgesetzt werden, gegebenenfalls in Gegenwart inerter Lösungsmittel und in Gegenwart von Säure-Acceptoren,

oder

in dem Fall, in dem X in der Formel (I) Schwefel ist,

(c) Verbindungen der Formel (VI)

$$R^1\text{-}\overset{\overset{\large S}{\|}}{\underset{\underset{\large Cl}{|}}{P}}\text{-}OCH_2CF_2CYF_2 \qquad (VI),$$

in der

$R^1$ und Y die im Vorstehenden angegebenen Bedeutungen haben,

mit Verbindungen der Formel (VII)

$$R^2 - SH \qquad (VII),$$

in der

$R^2$ die im Vorstehenden angegebenen Bedeutungen hat,

umgesetzt werden, gegebenenfalls in Gegenwart inerter Lösungsmittel und in Gegenwart von Säure-Acceptoren.

Die neuen Phosphonsäureester zeigen potente insektizide, akarizide und nematizide Eigenschaften.

Überraschenderweise zeigen die neuen Phosphonsäureester gemäß der vorliegenden Erfindung eine wesentlich größere insektizide, akarizide und nematizide Wirksamkeit als diejenigen, die aus dem oben genannten Stand der Technik bekannt sind.

In den allgemeinen Formeln sind $R^1$ und $R^2$ vorzugsweise Niederalkyl.

Niederalkyl im Sinne der Definition von $R^1$ und $R^2$ bedeutet geradkettiges oder verzweigtes Alkyl mit vorzugsweise 1 bis 8, insbesondere 1 bis 6 und am meisten bevorzugt 1 bis 4 Kohlenstoff-Atomen. Methyl, Ethyl, n- und i-Propyl sowie n-, i-, sec- und tert-Butyl seien als Beispiele erwähnt. Besonders bevorzugtes Niederalkyl $R^1$ ist Methyl oder Ethyl, und besonders bevorzugtes Niederalkyl $R^2$ ist n-Propyl oder sec-Butyl.

X in den allgemeinen Formeln bezeichnet vorzugsweise Sauerstoff.

Y in den allgemeinen Formeln bezeichnet vorzugsweise Wasserstoff.

Unter den Phosphonsäureestern der Formel (I) gemäß der vorliegenden Erfindung sind bevorzugte Verbindungen diejenigen, in denen $R^1$ Alkyl mit 1 bis 4 Kohlenstoff-Atomen, vorzugsweise Methyl oder Ethyl, bezeichnet, $R^2$ Alkyl mit 1 bis 4 Kohlenstoff-Atomen, vorzugsweise mit 3 bis 4 Kohlenstoff-Atomen, bezeichnet, X Sauerstoff

oder Schwefel, vorzugsweise Sauerstoff, bezeichnet und Y Wasserstoff oder Fluor, vorzugsweise Wasserstoff, bezeichnet.

Ganz besonders bevorzugte Phosphonsäureester der Formel (I) sind diejenigen, in denen $R^1$ Methyl oder Ethyl bezeichnet, $R^2$ n-Propyl oder sec-Butyl bezeichnet, X Sauerstoff bezeichnet und Y Wasserstoff bezeichnet.

Speziell erwähnt seien die folgenden Verbindungen (Propyl bedeutet n-Propyl):
S-Propyl-O-(2,2,3,3-tetrafluoropropyl)ethanphosphonothioat,
S-sec-Butyl-O-(2,2,3,3-tetrafluoropropyl)ethanphosphonothioat,
S-Propyl-O-(2,2,3,3-tetrafluoropropyl)methanphosphonothioat,

Wenn beispielsweise in Verfahren (a) Kalium-Salze von O-(2,2,3,3-Tetrafluoropropyl)ethanphosphonothioat und 1-Bromopropan als Ausgangsstoffe eingesetzt werden, kann der Reaktionsverlauf durch die folgende Gleichung dargestellt werden:

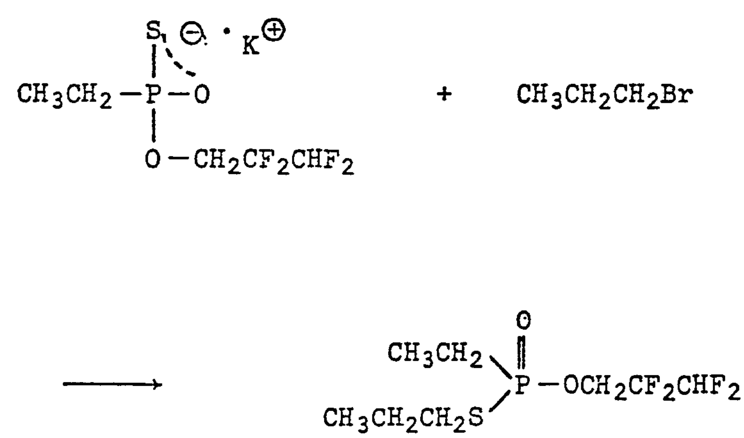

Wenn beispielsweise in Verfahren (b) S-Propyl-ethanphosphonochloridothioat und 2,2,3,3-Tetrafluoropropanol als Ausgangsstoffe eingesetzt werden, kann der Reaktionsverlauf durch die folgende Gleichung dargestellt werden:

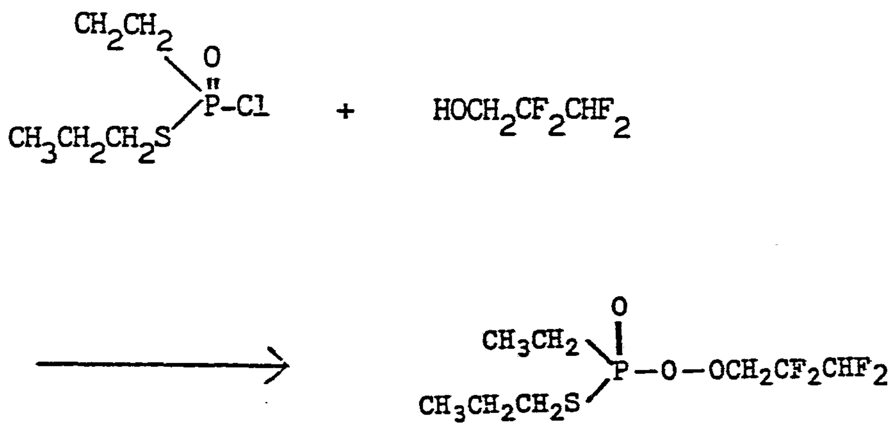

Wenn beispielsweise in Verfahren (c) O-(2,2,3,3-Tetrafluoropropyl)ethanphosphonochloridothioat und Propylmercaptan als Ausgangsstoffe eingesetzt werden, kann der Reaktionsverlauf durch die folgende Gleichung dargestellt werden:

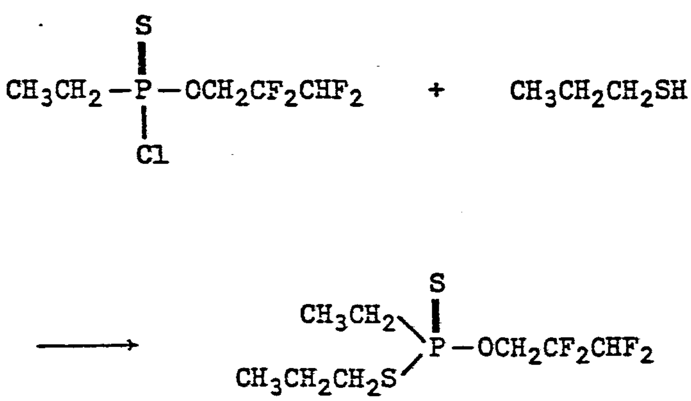

0205830

In der Formel (II) bezeichnet M vorzugsweise ein Ion eines Alkalimetalls wie Kalium oder Natrium.

Die gemäß der vorliegenden Erfindung einsetzbaren Verbindungen der Formel (II) sind neu. Als Beispiele seien erwähnt:

Kalium-Salz des O-(2,2,3,3-Tetrafluoropropyl)ethanphosphonothioats und

Kalium-Salz des O-(2,2,3,3-Tetrafluoropropyl)methanphosphonothioats.

Die Verbindungen der Formel (II) können erhalten werden, wenn die Verbindungen der oben bezeichneten Formel (VI) mit Alkalimetall-Hydroxiden wie Kaliumhydroxid in Gegenwart inerter Lösungsmittel wie Dioxan nach bekannten Methoden umgesetzt werden.

Die Verbindungen der oben bezeichneten Formel (VI) sind neu. Als Beispiele seien erwähnt:

O-(2,2,3,3-Tetrafluoropropyl)ethanphosphonochloridothioat und

O-(2,2,3,3-Tetrafluoropropyl)methanphosphonochloridothioat.

Die Verbindungen der Formel (VI) können erhalten werden, wenn die Verbindungen der Formel (VIII)

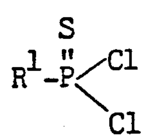

(VIII)

,

in der

$R^1$ die im Vorstehenden angegebenen Bedeutungen hat,

mit Verbindungen der oben bezeichneten Formel (V) in Gegenwart von Säure-Acceptoren nach bekannten Methoden umgesetzt werden.

Die Verbindungen der Formel (VIII) sind auf dem Gebiet der phosphororganischen Chemie bereits wohlbekannt. Als Beispiele seien erwähnt:
Ethanphosphonodichloridothioat und
Methanphosphonodichloridothioat.

Die Verbindungen der Formel (V) sind ebenfalls bereits wohlbekannt auf dem Gebiet der organischen Chemie. Als Beispiel sei erwähnt:
2,2,3,3-Tetrafluoropropanol.

In der Formel (III) steht Z für Halogen oder die Gruppe $-OSO_2R^3$, in der $R^3$ vorzugsweise Phenyl oder Niederalkyl, wie es im Vorstehenden für $R^1$ definiert wurde, bezeichnet. Vorzugsweise steht Z für Chlor oder Brom.

Die Verbindungen der Formel (III) sind bereits wohlbekannt auf dem Gebiet der organischen Chemie. Als Beispiele seien erwähnt:
1-Chloropropan,
1-Bromopropan,
1-Chlorobutan und
2-Chlorobutan.

Die Verbindungen der Formel (IV) sind auf dem Gebiet der phosphororganischen Chemie bekannt. Als Beispiele seien erwähnt:
S-Propyl-ethanphosphonochloridothioat,
S-Butyl-ethanphosphonochloridothioat und
S-Propyl-ethanphosphonochloridothioat.

Die Verbindungen der Formel (IV) können erhalten werden, wenn die Verbindungen der Formel (IX)

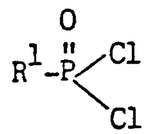

(IX)

,

in der

$R^1$ die im Vorstehenden angegebenen Bedeutungen hat,

mit Verbindungen der oben bezeichneten Formel (VII) in Gegenwart von Säure-Acceptoren nach bekannten Methoden umgesetzt werden.

Die Verbindungen der Formel (IX) sind ebenfalls auf dem Gebiet der phosphororganischen Chemie bereits wohlbekannt. Als Beispiele seien erwähnt:

Ethanphosphonodichloridat und

Methanphosphonodichloridat.

Die Verbindungen der Formel (VII) sind wohlbekannt. Als Beispiele seien erwähnt:

n-Propylmercaptan und

sec-Butylmercaptan.

Geeignete Verdünnungsmittel bei dem Verfahren (a) sind sämtliche inerten Lösungsmittel. Diese umfassen vorzugsweise Wasser; aliphatische, cycloaliphatische und aromatische Kohlenwasserstoffe (die gegebenenfalls chloriert sein können), zum Beispiel Hexan, Cyclohexan, Petrolether, Ligroin, Benzol, Toluol, Xylol und Chlorbenzol; Ether, zum Beispiel Diethylether, Methylethylether, Diisopropylether, Dibutylether, Dioxan und

Tetrahydrofuran; Ketone, zum Beispiel Aceton, Methylethylketon, Methylisopropylketon und Methylisobutylketon; Nitrile, zum Beispiel Acetonitril und Propionitril; Alkohole, zum Beispiel Methanol und Ethanol; Ester, zum Beispiel Ethylacetat und Amylacetat; Säureamide, zum Beispiel Dimethylformamid und Dimethylacetamid; Sulfone und Sulfoxide, zum Beispiel Dimethylsulfoxid und Sulfolan; und Basen wie Pyridin.

Das vorstehend beschriebene Verfahren (a) kann innerhalb eines weiten Temperaturbereichs durchgeführt werden. Im allgemeinen kann es zwischen etwa -20°C und dem Siedepunkt der Mischung, vorzugsweise zwischen etwa 0°C und etwa 100°C, durchgeführt werden. Während die Reaktion zweckmäßigerweise unter Umgebungsdruck durchgeführt wird, kann auch unter erhöhtem oder vermindertem Druck gearbeitet werden.

Bei der Durchführung des Verfahrens (a) können die angestrebten Phosphonsäureester in der Weise synthetisiert werden, daß man die Verbindungen der allgemeinen Formel (VI) vorher mit einem Alkalimetallhydroxid (beispielsweise Kaliumhydroxid) umsetzt, um ein Salz eines Phosphonothioats der allgemeinen Formel (II) zu synthetisieren, und danach die Verbindung der allgemeinen Formel (III) zur Reaktion bringt, wie speziell in dem nachfolgend beschriebenen Beispiel gezeigt wird.

In dem Verfahrens (b) können diejenigen inerten Lösungsmittel, die oben beispielhaft für das Verfahren (a) angegeben sind, verwendet werden, wobei Wasser und Alkohole ausgenommen sind.

Weiterhin kann die obige Reaktion (b) in Gegenwart von Säure-Acceptoren durchgeführt werden. Die Säure-Acceptoren können Hydride, Hydroxide, Carbonate, Hydrogencarbonate und Alkoholate von Alkalimetallen (vorzugsweise von Natrium und Kalium), die gewöhnlich eingesetzt werden, sowie tertiäre Amine, beispielsweise Triethylamin, Diethylanilin und Pyridin umfassen.

Das Herstellungsverfahren (b) kann in einem beträchtlich weiten Temperaturbereich, beispielsweise im allgemeinen zwischen etwa -30°C und etwa 140°C, vorzugsweise zwischen etwa -10°C und etwa 100°C, durchgeführt werden.

Während die obige Reaktion zweckmäßigerweise unter Umgebungsdruck durchgeführt wird, kann auch unter erhöhtem oder vermindertem Druck gearbeitet werden.

Bei der Durchführung des Herstellungsverfahrens (b) kann ein angestrebter Phosphonsäureester, wie speziell in dem nachfolgend beschriebenen Beispiel gezeigt wird, in der Weise erhalten werden, daß man die Verbindungen der allgemeinen Formel (IX) in Gegenwart inerter Lösungsmittel mit den Verbindungen der Formel (VII) zur Herstellung der Verbindungen der Formel (IV) als Zwischenprodukte umsetzt, die danach mit einem durch die Formel (V) bezeichneten Alkohol zur Reaktion gebracht werden.

Weiterhin können bei der praktischen Durchführung des Verfahrens (b) die Verbindungen der Formel (IV) als Zwischenprodukte ohne Abtrennung bei der nachfolgenden Reaktion eingesetzt werden, wodurch die angestrebte Verbindung in einfacher Weise in hoher Ausbeute und hoher Reinheit synthetisiert wird.

Das Verfahren (c) kann in Gegenwart der gleichen inerten Lösungsmittel durchgeführt werden wie das Herstellungsverfahren (b), erforderlichenfalls in Anwesenheit der gleichen säurebindenden Mittel wie in dem Herstellungsverfahren (b).

Das Herstellungsverfahren (c) kann innerhalb eines beträchtlich weiten Temperaturbereichs, beispielsweise im allgemeinen zwischen etwa -30°C und etwa 140°C, vorzugsweise zwischen etwa -10°C und etwa 100°C, durchgeführt werden.

Während die obige Reaktion zweckmäßigerweise unter Umgebungsdruck durchgeführt wird, kann auch unter erhöhtem oder vermindertem Druck gearbeitet werden.

In den Verfahren (a), (b) und (c) werden die Ausgangsstoffe vorzugsweise in etwa äquimolaren Mengen und die säurebindenden Mittel in den zur Bindung der während des Verfahrens gebildeten Säuren benötigten Mengen eingesetzt.

Die aktiven Substanzen gemäß der vorliegenden Erfindung zeigen potente insektizide, akarizide und nematizide Wirkung. Aus diesem Grunde können sie zur Bekämpfung verschiedenartiger Schadinsekten eingesetzt werden.

Beispiele für solche schädlichen Insekten sind die folgenden:

<u>Insekten der Ordnung Coleoptera</u>, z.B.

Callosobruchus chinensis,
Sitophilus zeamais,
Tribolium castaneum,

Epilachna vigintioctomaculata,
Agriotes fuscicollis,
Anomala rufocuprea,
Leptinotarsa decemlineata,
Diabrotica spp.,
Monochamus alternatus,
Lissorhoptus oryzophilus und
Lyctus brunneus;

<u>Insekten der Ordnung Lepidoptera</u>, z.B.
Lymantria dispar,
Malacosoma neustria,
Pieris rapae,
Spodoptera litura,
Mamestra brassicae,
Chilo suppressalis,
Pyrausta nubilalis,
Ephestia cautella,
Adoxophyes orana,
Carpocapsa pomonella,
Agrotis fucosa,
Galleria mellonella,
Plutella maculipennis und
Phyllocnistis citrella;

<u>Insekten der Ordnung Hemiptera</u>, z.B.
Nephotettix cincticeps,
Nilaparvata lugens,
Pseudococcus comstocki,
Unaspis yanonensis,
Myzus persicae,
Aphis pomi,
Aphis gossypii,

Rhopalosiphum pseudobrassicae,
Stephanitis nashi,
Nazara spp.,
Cimex lectularius,
Trialeurodes vaporariorum und
Psylla spp.;

<u>Insekten der Ordnung Orthoptera</u>, z.B.
Blatella germanica,
Periplaneta americana,
Gryllotalpa africana und
Locusta migratoria migratoriodes;

<u>Insekten der Ordnung Isoptera</u>, z.B.
Deucotermes speratus und
Coptotermes formosanus;

<u>Insekten der Ordnung Diptera</u>, z.B.
Musca domestica,
Aedes aegypti,
Hylemia platura
Culex pipiens,
Anopheles sinensis und
Culex tritaeniorhynchus.

<u>Milben</u>
können beispielsweise
Tetranychus telarius,
Tetranychus ulticae,
Panonychus citri,
Aculus pelekassi und
Torronomus spp.
umfassen.

Nematoden
können beispielsweise
Meloidogyne incognita,
Bursaphelenchus lignicolus Mamiya et Kiyohara,
Aphelenchoides besseyi,
Heterodera glycines und
Pratylenchus spp.
umfassen.

Weiterhin können auf dem Gebiet der bäuerlichen Tierhaltung und Tierzucht die neuen Verbindungen gemäß der vorliegenden Erfindung wirksam gegen verschiedene schädliche Tierparasiten, beispielsweise Zecken, Insekten und Würmer, eingesetzt werden. Beispiele für derartige Tierparasiten können die folgenden Schadinsekten umfassen.

Zecken, wie beispielsweise
Oranithodoros spp.,
Ixodes spp. und
Boophilus spp..

Insekten, wie beispielsweise
Gastrophilus spp.,
Stomoxys spp.,
Trichodectes spp.,
Rhodnius spp. und
Ctenocephalides canis.

Die aktiven Verbindungen können in gebräuchliche Formulierungen überführt werden, etwa Lösungen, Emulsionen, Suspensionen, Pulver, Schäume, Pasten, Granulat, Aerosole, mit der aktiven Verbindung imprägnierte natürliche oder synthetische Stoffe, sehr feine Kapseln

in polymeren Substanzen, Überzugsmassen zur Verwendung auf Saatgut (Beizmittel) sowie Formulierungen für den Einsatz mit Verbrennungseinrichtungen wie Räucherpatronen, Räucherdosen und Räucherschlangen sowie für die kalte Vernebelung und die warme Vernebelung nach dem Ultra-Low-Volume-Verfahren.

Diese Formulierungen können in bekannter Weise hergestellt werden, beispielsweise durch Vermischen der aktiven Verbindungen mit Streckmitteln, das heißt mit flüssigen oder verflüssigten gasförmigen oder festen Verdünnungsmitteln oder Trägern, gegebenenfalls unter Verwendung grenzflächenaktiver Mittel, das heißt von Emulgatoren und/oder Dispergiermitteln und/oder schaumbildenden Mitteln. Bei Verwendung von Wasser als Streckmittel können organische Lösungsmittel beispielsweise als Hilfslösungsmittel verwendet werden.

Als flüssige Lösungsmittel, Verdünnungsmittel oder Träger hauptsächlich geeignet sind aromatische Kohlenwasserstoffe wie Xylol, Toluol oder Alkylnaphthaline, chlorierte aromatische oder chlorierte aliphatische Kohlenwasserstoffe wie Chlorbenzole, Chloroethylene oder Methylenchlorid, aliphatische Kohlenwasserstoffe wie Cyclohexan oder Paraffine, beispielsweise Mineralöl-Fraktionen, Alkohole wie Butanol oder Glycol sowie deren Ether und Ester, Ketone wie Aceton, Methylethylketon, Methylisobutylketon oder Cyclohexanon oder stark polare Lösungsmittel wie Dimethylformamid und Dimethylsulfoxid sowie auch Wasser.

Unter verflüssigten gasförmigen Verdünnungsmitteln oder Trägern sind Flüssigkeiten zu verstehen, die bei normaler Temperatur und normalem Druck gasförmig wären,

beispielsweise Aerosol-Treibmittel wie halogenierte Kohlenwasserstoffe sowie Butan, Propan, Stickstoff und Kohlenstoffdioxid.

Als feste Träger verwendbar sind gemahlene natürliche Minerale wie Kaoline, Tone, Talkum, Kreide, Quarz, Attapulgit, Montmorillonit oder Diatomeenerde und gemahlene synthetische Minerale wie hochdisperse Kieselsäure, Aluminiumoxid und Silicate. Als feste Träger für Granulat können zerkleinerte und fraktionierte Natursteinmaterialien verwendet werden, etwa Calcit, Marmor, Bimsstein, Sepiolith und Dolomit sowie synthetisches Granulat aus anorganischen und organischen Mehlen und Granulat aus organischem Material wie Sägemehl, Kokosnußschalen, Maiskolben und Tabakstengel.

Als emulgierende und/oder schaumbildende Mittel können nicht-ionische und anionische Emulgatoren wie Polyoxyethylenfettsäureester, Polyoxyethylenfettalkoholether, beispielsweise Alkylarylpolyglycol-Ether, Alkylsulfonate, Alkylsulfate, Arylsulfonate sowie Albumin-Hydrolyseprodukte verwendet werden. Zu Dispergiermitteln zählen beispielsweise Ligninsulfit-Ablaugen und Methylcellulose.

Haftmittel wie Carboxymethylcellulose und natürliche und synthetische Polymere in Form von Pulvern, Granulat oder Latices wie Gummi arabicum, Polyvinylalkohol und Polyvinylacetat können bei der Formulierung verwendet werden.

Es ist möglich, farbgebende Mittel, etwa anorganische Pigmente wie beispielsweise Eisenoxid, Titanoxid und

Preußisch Blau und organische Farbstoffe wie Alizarin-Farbstoffe, Azo-Farbstoffe oder Metallphthalocyanin-Farbstoffe, sowie Spuren-Nährstoffe wie Salze von Eisen, Mangan, Bor, Kupfer, Cobalt, Molybdän und Zink zu verwenden.

Die Formulierungen enthalten im allgemeinen 0,1 bis 95 Gew.-%, vorzugsweise 0,5 bis 90 Gew.-% der aktiven Verbindung.

Die aktiven Verbindungen gemäß der Erfindung können in ihren handelsüblichen Formulierungen oder den aus diesen Formulierungen hergestellten Anwendungsformen im Gemisch mit anderen aktiven Verbindungen vorliegen, etwa mit Insektiziden, Ködern, Sterilisationsmitteln, Akariziden, Nematiziden, Fungiziden, Wachstumsregulatoren oder Herbiziden. Zu den Insektiziden gehören beispielsweise Phosphate, Carbamate, Carboxylate, chlorierte Kohlenwasserstoffe, Phenylharnstoffe und von Mikroorganismen erzeugte Substanzen.

Die aktiven Verbindungen gemäß der vorliegenden Erfindung können weiterhin in ihren handelsüblichen Formulierungen oder den aus diesen Formulierungen hergestellten Anwendungsformen im Gemisch mit synergistischen Mitteln vorliegen. Synergistische Mittel sind Verbindungen, die die Wirkung der aktiven Verbindungen steigern, ohne daß es für das zugesetzte synergistische Mittel erforderlich ist, selbst aktiv zu sein.

Der Gehalt der aktiven Verbindung in den aus den im Handel erhältlichen Formulierungen hergestellten Anwendungsformen kann innerhalb weiter Grenzen variieren.

Die Konzentration der aktiven Verbindung in den Anwendungsformen kann 0,0000001 bis 100 Gew.-% betragen und liegt vorzugsweise zwischen 0,0001 und 1 Gew.-%.

Die Verbindungen werden in üblicher Weise in einer den Anwendungsformen angemessenen Form zur Anwendung gebracht.

Bei der Verwendung gegen Hygiene-Schädlinge und Schädlinge in Produkt-Vorräten zeichnen sich die aktiven Verbindungen durch eine hervorragende Rückstandswirkung auf Holz und Ton sowie eine gute Beständigkeit gegen Alkali auf gekalkten Unterlagen aus.

Die folgenden Beispiele erläutern die vorliegende Erfindung im einzelnen. Die vorliegende Erfindung ist jedoch nicht auf diese Beispiele beschränkt.

Herstellungsbeispiele (Propyl bedeutet n-Propyl)

Beispiel 1

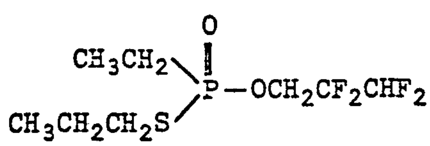

(Verbindung Nr. 1)

Zu einer Lösung von O-(2,2,3,3-Tetrafluoropropyl)ethanphosphonochloridothioat (26,1 g) in Dioxan (150 ml) wurden Kaliumhydroxid (13 g) und Wasser (30 ml) hinzugefügt, und die Mischung wurde 6 h bei 50-60°C gerührt.

Der durch Trocknung unter vermindertem Druck bis zur Bildung eines festen Stoffes erhaltene Rückstand wurde in Wasser (100 ml) gelöst, mit Toluol (2 x 100 ml) gerührt, und danach wurde die wäßrige Phase abgetrennt. Nach dem Trocknen unter vermindertem Druck bis zur Bildung eines festen Stoffes wurde die wäßrige Phase mit Ethanol (100 ml) und 1-Bromopropan (13 g) vermischt, und das Ganze wurde 4 h bei 40-50°C gerührt und dann 0,5 h gekocht. Der durch Abdestillieren der niedrigsiedenden Substanzen unter vermindertem Druck erhaltene Rückstand wurde mit Toluol (100 ml) vermischt, und die Toluol-Lösung wurde nacheinander mit einer 2-proz. wäßrigen Kaliumhydroxid-Lösung und mit Wasser gewaschen und über wasserfreiem Natriumsulfat getrocknet. Der nach dem Abdestillieren des Toluols erhaltene Rückstand wurde der Destillation unter vermindertem Druck unterzogen, wonach das angestrebte S-Propyl-O-(2,2,3,3-tetrafluoropropyl)ethanphosphonothioat (25 g) erhalten wurde; Sdp. 98-100°C/3,1 mbar (2,3 mmHg).

Beispiel 2

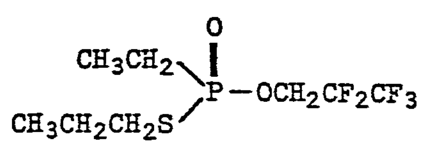

(Verbindung Nr. 2)

Zu einer Lösung von Ethanphosphonodichloridat (16,3 g) in Ether (100 ml) wurde tropfenweise eine aus Propylmercaptan (8 g), Triethylamin (11 g) und Ether (100 ml) bestehende Lösung bei 0-5°C hinzugefügt. Nach einstündigem Erhitzen zum Rückfluß wurde die Mischung auf

Raumtemperatur abgekühlt und filtriert. Der durch Abdestillieren der niedrigsiedenden Substanzen unter vermindertem Druck erhaltene Rückstand wurde in Toluol (50 ml) gelöst, und hierzu wurde tropfenweise eine Mischung von 2,2,3,3,3-Pentafluoropropanol (15,2 g), Triethylamin (11 g) und Toluol (50 ml) bei 10-20°C hinzugefügt. Die Mischung wurde 3 h bei 40-50°C und 1 h bei 80°C gerührt und danach auf Raumtemperatur abgekühlt und nacheinander mit 1-proz. Salzsäure. einer 2-proz. wäßrigen Kaliumhydroxid-Lösung und Wasser gewaschen und über wasserfreiem Natriumsulfat getrocknet. Der durch Abdestillieren des Toluols erhaltene Rückstand wurde unter vermindertem Druck rektifiziert, wonach S-Propyl-O-(2,2,3,3,3-pentafluoropropyl)ethanphosphonothioat (13 g) erhalten wurde; Sdp. 96-99°C /2,7 mbar (2 mmHg).

## Beispiel 1a

Ein Beispiel für die Synthese von O-(2,2,3,3-Tetrafluoropropyl)ethanphosphonochloridothioat als eines der in Beispiel 1 eingesetzten Ausgangsstoffe ist in dem folgenden Bezugsbeispiel dargestellt.

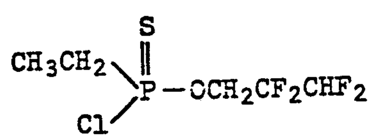

Zu einer Lösung aus Ethanphosphonodichloridothioat (32,6 g), 2,2,3,3-Tetrafluoro-1-propanol (27 g) und Toluol 200 ml wurde tropfenweise bei 0°C Triethylamin (22 g) hinzugefügt. Nach fünfstündigem Rühren bei 50°C wurde auf Raumtemperatur abgekühlt, und die organische

Schicht wurde nacheinander mit 1-proz. Salzsäure und Eiswasser gewaschen und dann über wasserfreiem Natriumsulfat getrocknet, wonach das angestrebte O-(2,2,3,3-Tetrafluoropropyl)ethanphosphonochloridothioat (25 g) erhalten wurde; Sdp. 96-103°C/2,7 mbar (2 mmHg).

Die Verbindungen gemäß der vorliegenden Erfindung, die nach den gleichen Arbeitsweisen wie in den Beispielen 1 und 2 erhalten wurden, sind hiernach im einzelnen aufgeführt.

| Verbindung Nr. | |
|---|---|
| 3 | S-sec-Butyl-O-(2,2,3,3-tetrafluoropropyl)-ethanphosphonothioat, Sdp. 100-105°C/2,7 mbar (2 mmHg). |
| 4 | S-sec-Butyl-O-(2,2,3,3-tetrafluoropropyl)-methanphosphonothioat, Sdp. 96-103°C/2,9 mbar (2,2 mmHg). |
| 5 | S-Propyl-O-(2,2,3,3-tetrafluoropropyl)methanphosphonothioat, Sdp. 100-105°C/2,9 mbar (2,2 mmHg). |
| 6 | S-Propyl-O-(2,2,3,3-tetrafluoropropyl)benzolphosphonothioat, Sdp. 130-133°C/2,9 mbar (2,2 mmHg). |

Biologische Test-Beispiele

Vergleichs-Verbindung A-1:

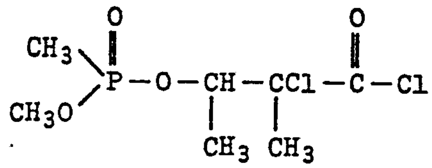,

die Verbindung, die in der JP-OS 142 516/1975 beschrieben ist.

Beispiel 3

Test gegen Larven von Spodoptera litura:

Herstellung der Lösung der geprüften Chemikalie:

| | | |
|---|---|---|
| Lösungsmittel: | Xylol | 3 Gew.-Teile |
| Emulgator: | Polyoxyethylen-alkylphenylether | 1 Gew.-Teil |

Zur Herstellung einer Formulierung einer geeigneten aktiven Verbindung wurde 1 Gew.-Teil der aktiven Verbindung mit der angegebenen Menge Lösungsmittel, die die angegebene Menge Emulgator enthielt vermischt, und die erhaltene Mischung wurde mit Wasser auf eine vorher festgesetzte Konzentration verdünnt.

Test-Verfahren:

Blätter von Ipomoea batatas wurden in die wäßrige Verdünnung mit der vorbestimmten Wirkstoff-Konzentration getaucht und nach dem Trocknen der Chemikalienlösung an der Luft in Laborschalen von 9 cm Durchmesser gelegt,

in die 10 Larven im 3. Stadium von Spodoptera litura eingesetzt wurden. Nachdem die Schalen in einem thermostatisierten Raum von 28°C gehalten worden waren, wurde nach 24 h die Zahl der toten Insekten bestimmt, und die Insektizid-Rate wurde berechnet.

Die Ergebnisse sind in Tabelle 1 aufgeführt.

Tabelle 1

| Verbindung Nr. | Wirkstoff-Konzentration ppm | Insektizid-Rate % |
|---|---|---|
| 1 | 300 | 100 |
| 2 | 300 | 100 |
| Vergleichs-Verbindung A-1 | 300 | 0 |

Beispiel 4

Test gegen Callosobruchus chinensis:

Test-Verfahren:

In eine 9 cm Laborschale wurde jeweils ein Filterpapier gelegt, und 1 ml jeder der mit Wasser verdünnten, eine vorbestimmte Wirkstoff-Konzentration aufweisenden Lösungen der aktiven Verbindungen, die wie in Beispiel 3 hergestellt wurden, wurde hinzugegeben. 20 Callosobruchus chinensis wurden eingesetzt. Nachdem die

Schalen in einem thermostatisierten Raum von 28°C gehalten worden waren, wurde nach 24 h die Zahl der toten Insekten bestimmt, und die Insektizid-Rate wurde berechnet.

Die Ergebnisse sind in Tabelle 2 aufgeführt.

Tabelle 2

| Verbindung Nr. | Wirkstoff-Konzentration ppm | Insektizid-Rate % |
|---|---|---|
| 1 | 100 | 100 |
| 2 | 100 | 100 |
| Vergleichs-Verbindung A-1 | 100 | 0 |

Beispiel 5

Test gegen Tetranychus telarius (Sprühtest):

Test-Verfahren:

50 bis 100 ausgewachsene Exemplare von Tetranychus telarius, die gegen Organophosphor-Mittel resistent waren, wurden auf den Blättern von Phaseolus vulgaris im 2-Blatt-Stadium ausgesetzt, die in Töpfen mit einem Durchmesser von 6 cm gezogen worden waren. 2 Tage nach der Inokulierung wurde eine wie in Beispiel 3 hergestellte wäßrige Verdünnung der aktiven Verbindung mit

festgelegter Konzentration in einer Menge von 40 ml je Topf gesprüht. Die Töpfe wurden in einem Gewächshaus gehalten. Nach 10 Tagen wurde die Bekämpfungswirkung bewertet und durch den Index bezeichnet. Der Index ist wie folgt definiert:

3: Anteil der überlebenden ausgewachsenen Insekten: 0 %;

2: Anteil der überlebenden ausgewachsenen Insekten: 0 % bis 5 %, der nicht behandelten Fälle;

1: Anteil der überlebenden ausgewachsenen Insekten: 5 % bis 50 %, der nicht behandelten Fälle;

0: Anteil der überlebenden ausgewachsenen Insekten: mehr als 50 %, der nicht behandelten Fälle.

Die Ergebnisse sind in der Tabelle 3 aufgeführt.

Tabelle 3

| Verbindung Nr. | Wirkstoff-Konzentration ppm | Bekämpfungs-Wert |
|---|---|---|
| 1 | 300 | 3 |
| 2 | 300 | 3 |
| Vergleichs-Verbindung | | |
| A - 1 | 1000 | 0 |

## Beispiel 6

Test mit Blatella Germanica

Test-Verfahren:

Ein Filterpapier wurde jeweils auf den Boden einer Laborschale von 9 cm Durchmesser gelegt, und 1 ml einer wäßrigen Verdünnung einer aktiven Verbindung mit einer vorbestimmten Konzentration, die wie in Beispiel 3 hergestellt wurde, wurde hinzugegeben. 10 ausgewachsene Exemplare von Blatella Germanica wurden in die Schale eingesetzt. Nachdem die Schalen in einem thermostatisierten Raum von 28°C gehalten worden waren, wurde nach 24 h die Zahl der toten Insekten bestimmt und die Insektizid-Rate berechnet.

Die Ergebnisse sind in der Tabelle 4 aufgeführt.

Tabelle 4

| Verbindung Nr. | Wirkstoff-Konzentration ppm | Insektizid-Rate % |
|---|---|---|
| 1 | 100 | 100 |
| 2 | 100 | 100 |
| Vergleichs-Verbindung A-1 | 1000 | 0 |

0205830

## Beispiel 7

Test gegen Meloidogyne incognita:

Herstellung der Lösung der geprüften Chemikalie:

2 Teile einer aktiven Verbindung und 98 Teile Talkum wurden pulverisiert und miteinander vermischt.

Test-Verfahren:

Die wie oben angegeben zubereitete aktive Verbindung wurde in Mengen von 50, 25, 10 und 5 ppm auf durch Meloidogyne incognita verseuchte Erde aufgebracht und zur Vermischung mit dieser gleichmäßig verrührt und dann in Töpfe von 2 dm² gefüllt. In diese wurden etwa 20 Körner Tomaten-Samen (Art: Kurihara) eingesät und im Gewächshaus angezogen. Nach vier Wochen wurden die Tomatenpflanzen ausgegraben, ohne sie dabei zu verletzen. Der Grad der Schädigung von 10 Wurzeln derselben wurde zur Bestimmung des Wurzelgallen-Index festgestellt und nach dem folgenden Maßstab bewertet:

Grad der Schädigung:

- 0: keine Gallen (vollständige Bekämpfung);
- 1: leichte Gallenbildung;
- 3: merkliche Gallenbildung;
- 4: sehr starke Gallenbildung (entsprechend derjenigen unbehandelter Pflanzen).

$$\text{Wurzelgallen-Index} = \frac{\sum (\text{Klassenbewertung} \times \text{Zahl der Individuen})}{(\text{Gesamtzahl der bewerteten Individuen}) \times 4} \times 100$$

Die Bewertung aufgrund der Bekämpfungswirkung erfolgte mit Hilfe der nachstehenden Formel:

$$\text{Bekämpfungswirkung} = \frac{\text{Wurzelgallen-Index der unbehandelt. Gruppe} - \text{Wurzelgallen-Index der behandelt. Gruppe}}{\text{Wurzelgallen-Index der unbehandelten Gruppe}} \times 100$$

Eine Bekämpfungswirkung von 100 % bezeichnet eine vollständige Bekämpfung.

Die so erhaltenen Ergebnisse sind in Tabelle 5 aufgeführt.

Tabelle 5

| Verbindung Nr. | Bekämpfungswirkung (%) Wirkstoff-Konzentration (ppm) 50 | 25 | 10 |
|---|---|---|---|
| 1 | 100 | 100 | 100 |
| 2 | 100 | 100 | 100 |
| Vergleichs-Verbindung A-1 | 0 | | |

## Patentansprüche

1. Phosphonsäureester der Formel (I)

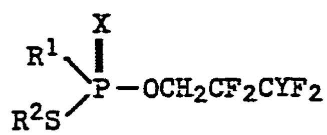 (I) ,

in der

$R^1$ Niederalkyl oder Phenyl bezeichnet,

$R^2$ Niederalkyl bezeichnet,

X Sauerstoff oder Schwefel bezeichnet und

Y Wasserstoff oder Fluor bezeichnet.

2. Verbindungen nach Anspruch 1, dadurch gekennzeichnet, daß

$R^1$ eine Alkyl-Gruppe mit 1 bis 4 Kohlenstoff-Atomen ist,

$R^2$ eine Alkyl-Gruppe mit 3 bis 4 Kohlenstoff-Atomen ist,

X Sauerstoff ist und

Y Wasserstoff ist.

3. Verbindungen nach Anspruch 1, dadurch gekennzeichnet, daß
   $R^1$ Methyl oder Ethyl ist,
   $R^2$ n-Propyl oder sec-Butyl ist,
   X Sauerstoff ist und
   Y Wasserstoff ist.

4. S-Propyl-O-(2,2,3,3-tetrafluoropropyl)ethanphosphonothioat der nachstehenden Formel

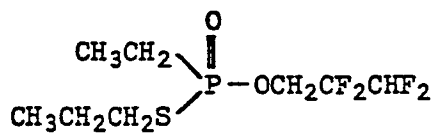

.

5. Verfahren zur Herstellung von Phosphonsäureestern der Formel (I)

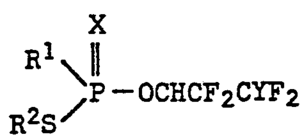
(I)

,

in der
$R^1$ Niederalkyl oder Phenyl bezeichnet,
$R^2$ Niederalkyl bezeichnet,
X Sauerstoff oder Schwefel bezeichnet und
Y Wasserstoff oder Fluor bezeichnet,
dadurch gekennzeichnet, daß
in dem Fall, in dem X in der Formel (I) Sauerstoff ist,

(a) die Verbindungen der Formel (II)

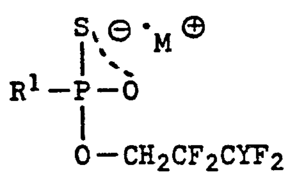
(II)

,

in der

$R^1$ und Y die im Vorstehenden angegebenen Bedeutungen haben und

M ein Alkalimetall- oder Ammonium-Ion bezeichnet,

mit Verbindungen der Formel (III)

$$R^2 - Z \qquad \text{(III)},$$

in der

$R^2$ die im Vorstehenden angegebenen Bedeutungen hat und

Z für Halogen oder die Gruppe $-OSO_2R^3$ steht, worin $R^3$ Niederalkyl oder Aryl bezeichnet,

umgesetzt werden, gegebenenfalls in Gegenwart inerter Lösungsmittel,

oder

(b) Verbindungen der Formel (IV)

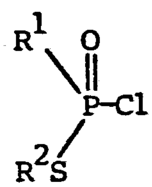

(IV) ,

in der

$R^1$ und $R^2$ die im Vorstehenden angegebenen Bedeutungen haben,

mit Verbindungen der Formel (V)

$$HO-CH_2CF_2CYF_2 \qquad \text{(V)},$$

in der

Y die im Vorstehenden angegebenen Bedeutungen hat,

umgesetzt werden, gegebenenfalls in Gegenwart inerter Lösungsmittel und in Gegenwart von Säure-Acceptoren,

oder

in dem Fall, in dem X in der Formel (I) Schwefel ist,

(c) Verbindungen der Formel (VI)

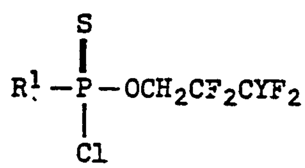

(VI)

,

in der

$R^1$ und Y die im Vorstehenden angegebenen Bedeutungen haben,

mit Verbindungen der Formel (VII)

$$R^2 - SH \qquad (VII),$$

in der

$R^2$ die im Vorstehenden angegebenen Bedeutungen hat,

umgesetzt werden, gegebenenfalls in Gegenwart inerter Lösungsmittel und in Gegenwart von Säure-Acceptoren.

6. Insektizide, akarizide und nematizide Mittel, dadurch gekennzeichnet, daß sie wenigstens einen Phosphonsäureester der Formel (I) nach Ansprüchen 1 bis 5 enthalten.

7. Verfahren zur Bekämpfung von Insekten, Milben und Nematoden dadurch gekennzeichnet, daß man Phosphonsäureester der Formel (I) nach Ansprüchen 1 bis 5 auf die Insekten, Milben, Nematoden und/oder deren Lebensraum einwirken läßt.

8. Verwendung von Phosphonsäureestern der Formel (I) nach Ansprüchen 1 bis 5 zur Bekämpfung von Insekten, Milben und Nematoden.

9. Verfahren zur Herstellung insektizider, akarizider und nematizider Mittel, dadurch gekennzeichnet, daß Phosphonsäureester der Formel (I) nach Ansprüchen 1 bis 5 mit Streckmitteln und/oder grenzflächenaktiven Mitteln vermischt werden.

10. Verbindungen der Formel (II)

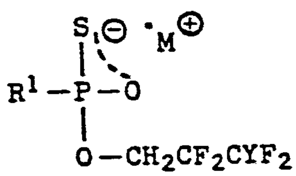

(II) ,

in der

$R^1$ und Y die in Anspruch 1 angegebenen Bedeutungen haben und

M ein Alkalimetall- oder Ammonium-Ion bezeichnet.

11. Verbindungen der Formel (VI)

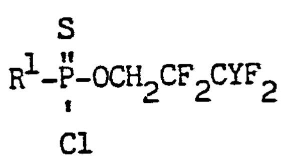

(VI) ,

in der

$R^1$ und Y die in Anspruch 1 angegebenen Bedeutungen haben.

Europäisches Patentamt

# EUROPÄISCHER RECHERCHENBERICHT

0205830

Nummer der Anmeldung

EP 86 10 5863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 534 587 (BAYER AG.)<br>* Ansprüche *<br>----- | 1,6-10 | C 07 F 9/40<br>A 01 N 57/18<br>C 07 F 9/42 |
| | | | RECHERCHIERTE SACHGEBIETE (Int. Cl.4) |
| | | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 15-09-1986 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82